# EUROPEAN PATENT APPLICATION

(11) **EP 0 706 033 A2**
(43) Date of publication of application: **10.04.1996**
(21) Application number: 95115635.5
(22) Date of filing: 04.10.1995
(51) Int. Cl.: G01F 23/24, G01F 23/00

(54) **Safety and liquid level-indicating device for steam heating tanks**

(30) Priority: 07.10.1994 IT BO940442
(71) Applicant: PIETRO FOGACCI S.r.l., I-40131 Bologna (IT)
(72) Inventor: Baldoni, Patricio José, 40129 Bologna (IT)
(74) Representative: Modiano, Guido, Dr.-Ing.

(57) **Abstract**

A safety and liquid level-indicating device for steam heating tanks, characterized in that it comprises: minimum-level sensing means (4), arranged inside the heating tank (1) above heating means (2) of the heating tank and meant to be immersed in the liquid contained in the heating tank; maximum-level sensing means (3), also arranged inside the heating tank and meant to be immersed in the liquid; the sensing means (4) constituting an electric circuit adapted to be closed through the liquid contained in the heating tank; control and signalling means (8), inserted in the electric circuit through electrical lines connected to the sensing means (4) and adapted to generate a signal that is sent to the sensing means (4) and can be sensed by the control and signalling means, which are adapted to interrupt power supply to heating means if there is insufficient or no liquid inside the heating tank; the control and signalling means comprising visual signalling means (11) and acoustic signalling means, adapted to emit, respectively, light and sound indications at the beginning of, and during, operations for filling or emptying the heating tank in relation to particular levels reached by the liquid inside the heating tank (1).

## Description

The present invention relates to a safety and liquid-level indicating device for steam heating tanks and the like, particularly for irons.

It is known that a steam heating tank or boiler, both for large systems and for small household appliances such as irons and the like, is equipped with heating elements generally constituted by an electric resistor. In using these devices, it can happen that the heating tank is not sufficiently filled with water, either due to initial lack or due to consumption caused by use: in this case there is the risk of operating the appliance without sufficient water.

Conventional heating tanks have a solution for obviating this drawback. They are provided with thermostat means adapted to control the temperature of the heating means. If the appliance is activated without water, the heating means increase their temperature, which is detected by the thermostat and switches on alarm means constituted for example by a warning light.

However, this solution entails considerable thermal variations affecting the heating means, with a consequent rapid deterioration thereof.

Furthermore, the above mentioned solution does not allow to know, at least approximately, the level reached by the liquid inside the heating tank during use.

Another drawback resides in the fact that the user, while filling the heating tank, does not know the level reached by the liquid inside said heating tank and thus risks introducing excess liquid.

A principal aim of the present invention is therefore to solve the above mentioned problems by providing a safety and liquid level-indicating device for a steam heating tank, adapted to intervene when said level drops below a preset safety limit.

Within the scope of this aim, an object of the present invention is to provide a device adapted to give the user a visual indication as regards the level of the liquid present in the heating tank.

Another object of the present invention is to provide a device also capable of providing, in addition to a visual indication, an acoustic indication to warn the user that a particular condition is occurring.

Another object of the present invention is to provide a device that is highly reliable, relatively easy to manufacture, and at competitive costs.

This aim, these objects, and others which will become apparent hereinafter are achieved by a safety and liquid level-indicating device for steam heating tanks, characterized in that it comprises: minimum-level sensing means, arranged inside the heating tank above heating means of said heating tank and being immersed in the liquid contained in said heating tank; maximum-level sensing means, also arranged inside said heating tank and being immersed in the liquid; said sensing means constituting an electric circuit adapted to be closed through the liquid contained in said heating tank; control and signalling means, inserted in said electric circuit through electrical lines connected to said sensing means and adapted to generate a signal that is sent to said sensing means and can be sensed by said control and signalling means, which are adapted to interrupt power supply to said heating means if there is insufficient or no liquid inside said heating tank; said control and signalling means comprising visual signalling means and acoustic signalling means, adapted to emit, respectively, light and sound indications at the beginning of, and during, operations for filling or emptying said heating tank in relation to particular levels reached by said liquid inside the heating tank.

Further characteristics and advantages of the invention will become apparent from the following detailed description of a preferred but not exclusive embodiment thereof, illustrated only by way of non-limitative example in the accompanying drawings, wherein:
figure 1 is a vertical sectional view of the steam heating tank equipped with means for sensing the level of the liquid, according to the invention;
figure 2 is an electrical diagram of the means for controlling and signalling the level of the liquid in the heating tank, according to the present invention.

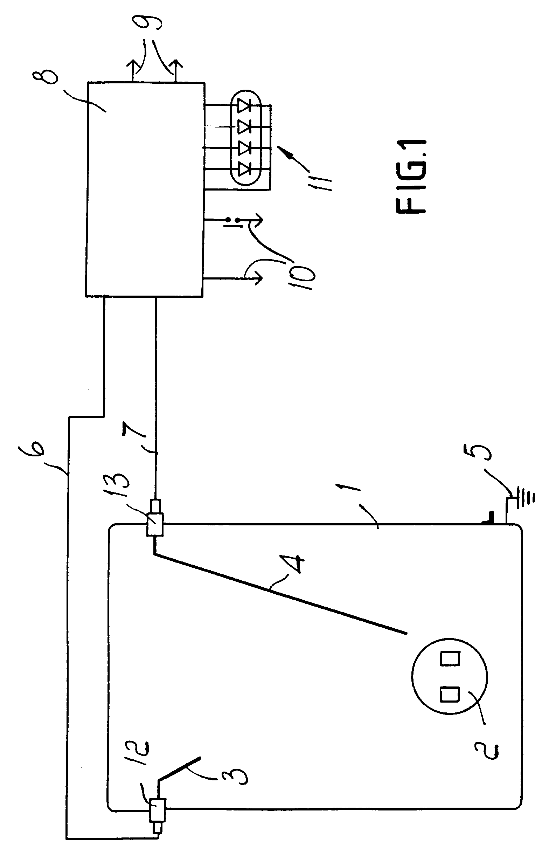

With reference to figure 1, the reference numeral 1 designates the heating tank. Said heating tank 1 is internally provided with heating means 2 constituted by a conventional electrical resistor. The heating tank is adapted to be filled with water to produce steam.

Means 3 for sensing the preset maximum level of the water contained in the heating tank, advantageously constituted by a metallic probe, are inserted in the heating tank 1 above the heating means 2. Said probe 3, which is folded downwardly inside the heating tank 1, protrudes from said heating tank with a straight portion inserted in a sheath 12 made of insulating material.

Means 4 for sensing the preset minimum level of the water contained in the heating tank, advantageously constituted by a metallic probe, are inserted in the heating tank 1, also above the heating means 2. The probe 4 is folded downwardly too inside the heating tank 1 and protrudes from said heating tank with a straight portion inserted in a sheath 13 made of insulating material.

The probes 3 and 4 are respectively connected, by means of electrical lines 6 and 7, to control and signalling means 8 constituted by an appropriate electronic board and adapted to interrupt the flow of electrical current to the heating means 2 of the heating tank 1 if there is insufficient or no water inside the heating tank and to indicate the level of the water that is present in said heating tank.

The control and signalling means 8 are connected, at 9, to the mains power supply, and at 10 there is the relay that controls the disconnection of the power supply of the heating means 2 if there is no water inside the heating tank 1.

The control and signalling means 8 drive visual signalling means 11 constituted by a light-emitting element (LED) having three primary colors: red, green, and blue. This light-emitting element is an electronic device that emits photons at different frequencies.

The heating tank 1 is furthermore grounded at 5.

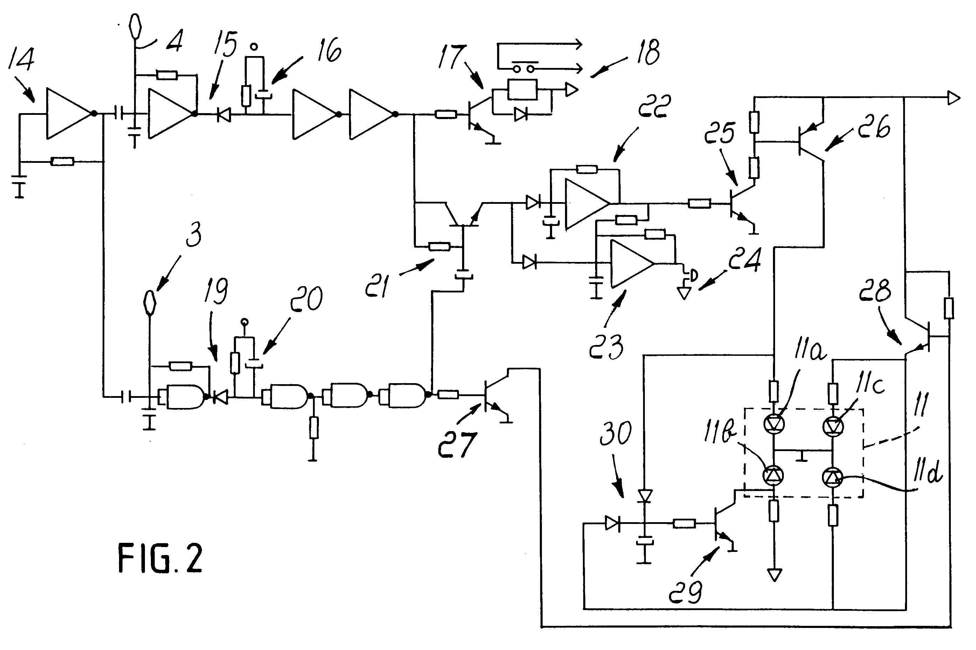

With reference now to figure 2, the control and signalling means 8 are described.

The reference numeral 14 designates pulse generating means, advantageously constituted by an oscillator adapted to generate a square wave at the frequency of 100 Hz; the oscillator is connected to minimum-level sensing means 4 and to a first pulse sensing stage 15 adapted to sense the pulses originating from the pulse generating means 3.

From the sensing stage 15, the signal reaches a delay (antibounce) circuit 16, which has the purpose of eliminating any bounces on the relay 18.

From the delay circuit, the signal reaches the actuation means 17 of the relay 18, which are adapted to interrupt power supply to the heating means 2 inside the heating tank 1.

The pulse generating means are also connected to the maximum-level sensing means 3, which are in turn connected to a second pulse sensing stage 19 adapted to sense the pulses originating from the pulse generating means 3.

The signal passes from the second sensing stage 19 to a delay circuit 20 similar to the circuit 16.

When it leaves both delay circuits 16 and 20, the signal passes through means for actuating the maximum-level acoustic signal 21, which drive acoustic signalling means constituted by a low-frequency oscillator 22 and by a high-frequency oscillator 23 that are mutually connected and respectively adapted to emit two modulated sounds at low and high frequencies. Finally, an acoustic signalling device 24, constituted for example by an acoustic element of the piezoelectric type, is connected to the oscillator 23.

The acoustic signalling means thus formed drives minimum-level actuation means 25, which are constituted by a transistor that is collector-connected to the base of a second transistor 26 and adapted to activate the red color of the visual signalling means 11.

The output signal from the second delay circuit 20 furthermore enters the base of a transistor 27 that constitutes maximum-level actuation means, is collector-connected to the base of another transistor 28, and is adapted to activate the blue color of the visual signalling means 11.

Finally, medium-level actuation means 29, constituted by a transistor, are base-connected to a medium-level antibounce delay circuit 30, adapted to produce a light-emission pause of the visual signalling means 11, and are collector-connected to said visual signalling means. Said medium-level actuation means are adapted to activate the green color of the visual signalling means 11.

It should be noted that the visual signalling means 11 are constituted by a LED with three primary colors, in which, in figure 2, the reference numeral 11a designates the red light-emitting indicator, the reference numeral 11b designates the green one, and the reference numerals 11c and 11d designate the blue ones. There are two blue indicators to give this color greater brightness.

With reference to the above figures, the operation of the device is as follows.

When the appliance is switched on, and assuming that no water is present in the heating tank 1, the minimum-level probe 4 is not immersed in the water and the circuit is open. In this case, the signal generated by the pulse generating means 14 reaches the sensing stage 15 and the relay 18 is de-energized, so as to interrupt power supply to the heating means 2. Simultaneously, the red light-emitting indicator 11a, actuated by the transistors 25 and 26, lights up intermittently. In addition to the visual signal, the device also activates the acoustic signalling means, producing a two-tone sound.

During the filling of the heating tank, and once the minimum water level has been exceeded, the device assumes the state in which the probe 4, which is at this point immersed in the water, constitutes a closed circuit together with the wall of the heating tank 1. Therefore, the signal generated by the pulse generating means 14 does not reach the sensing stage 15 and the relay 18 is energized, so as to allow to supply electric power to the heating means 2. The device thus assumes the state in which the LED 11 becomes fixed green (light-emitting indicator 11b), indicating the medium level. At this point, no acoustic signalling is provided.

If water continues to be fed into the heating tank 1, the condition is reached in which the maximum-level probe 3 too constitutes a closed circuit together with the wall of the heating tank 1, so as to continuously activate the blue light-emitting indicators 11c and 11d that indicate the maximum level reached by the water inside the heating tank 1. A short tone frequency acoustic signal is also emitted at this level, thus sparing the user the need to constantly monitor the light-emitting indicator to avoid the water being introduced from overflowing out of the heating tank 1.

During heating tank emptying caused by use on the part of the user, the device passes from the final point to the intermediate point (green light-emitting indicator 11b lit continuously without acoustic signal) and then to the initial step (red indicator 11a lit intermittently with two-tone acoustic alarm).

As clearly shown by the above description, the present invention fully achieves the intended aim and objects.

Said device in fact allows to check the level of the liquid inside a heating tank and to intervene, by interrupting the supply of electric power to the heating means, if said level is lower than a minimum level, which is preset by immersing the minimum-level probe inside the heating tank. Said preset minimum level in any case remains always adequately above the heating means. Furthermore, the possibility of using both a visual signal (in three colors) and an acoustic signal prevents the user from making any mistakes, allowing him to keep the level of the liquid fed into the heating tank constantly under control.

The device according to the invention is susceptible of numerous modifications and variations, all of which are within the scope of the inventive concept. Furthermore, all the details may be replaced with technically equivalent elements. For example, instead of the single three-color light-emitting element (LED) 11 it is possible to provide three separate light-emitting elements capable of providing three different colors, each of which indicates a different level.

The materials employed, as well as the dimensions, may of course be any according to the requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Safety and liquid level-indicating device for steam heating tanks, characterized in that it comprises: minimum-level sensing means (4), arranged inside the heating tank (1) above heating means (2) of said heating tank and being immersed in the liquid contained in said heating tank; maximum-level sensing means (3), also arranged inside said heating tank (1) and being immersed in the liquid; said sensing means (3, 4) constituting an electric circuit closable through the liquid contained in said heating tank (1); control and signalling means (8), inserted in said electric circuit through electrical lines (6, 7) connected to said sensing means (3, 4) and adapted to generate a signal that is sent to said sensing means (3, 4) and can be sensed by said control and signalling means (8), which are adapted to interrupt power supply to said heating means (2) if there is insufficient or no liquid inside said heating tank (1); said control and signalling means (8) comprising visual signalling means (11) and acoustic signalling means (22, 23, 24), for emitting, respectively, light and sound indications at the beginning of, and during, operations for filling or emptying said heating tank (1) in relation to particular levels reached by said liquid inside the heating tank (1).

2. Device according to claim 1, characterized in that said minimum-level sensing means (4) and said maximum-level sensing means (3) are constituted by metallic probes adapted to be immersed in the liquid contained in said heating tank (1).

3. Device according to one or more of the preceding claims, characterized in that said control and signalling means (8) comprise: pulse generating means (14), adapted to generate signals that are sent to said maximum-level sensing means (3) and said minimum-level sensing means (4); stages (15, 19) for sensing the signals generated by said pulse generating means (14); actuation means (17) adapted to receive the signal sensed by said sensing stage (15) and to interrupt the supply of electric power to said heating means (2) if said liquid is not present; minimum-level actuation means (25, 26); medium-level actuation means (29); and maximum-level actuation means (27, 28); said actuation means (25, 26; 29; 27, 28) being adapted to drive said visual signalling means (11).

4. Device according to one or more of the preceding claims, characterized in that said pulse generating means (14) are constituted by an oscillator.

5. Device according to one or more of the preceding claims, characterized in that said acoustic signalling means (22, 23, 24) comprise a low-frequency oscillator (22) and a high-frequency oscillator (23) adapted to drive an acoustic signalling device (24) so as to emit single-frequency and two-tone acoustic signals.

6. Device according to one or more of the preceding claims, characterized in that the signals in output from said sensing stages (15, 19) pass through delay circuits (16, 20).

7. Device according to one or more of the preceding claims, characterized in that there is a delay circuit (30) connected to said medium-level actuation means (29) and adapted to produce a light-emission pause for said visual signalling means (11).

8. Device according to one or more of the preceding claims, characterized in that said visual signalling means (11) are constituted by a LED with three primary colors.

9. Device according to one or more of the preceding claims, characterized in that said visual signalling means (11) are constituted by three light-emitting elements adapted to provide three different colors.

10. Device according to one or more of the preceding claims, characterized in that said acoustic device (24) is an acoustic element of the piezoelectric type.
